# EUROPÄISCHE PATENTSCHRIFT

(11) **EP 1 297 747 B1**
(45) Veröffentlichungstag und Bekanntmachung des Hinweises auf die Patenterteilung: **18.08.2004**
(21) Anmeldenummer: 01123455.6
(22) Anmeldetag: 28.09.2001
(51) Int. Cl.: A22C 11/02

(54) **Füllvorrichtung zum Befüllen von Hüllmaterial**
Device for stuffing tubular casings
Dispositif à bourrer des enveloppes tubulaires

(43) Veröffentlichungstag der Anmeldung: 02.04.2003
(73) Patentinhaber: Albert Handtmann Maschinenfabrik GmbH & Co. KG, 88400 Biberach (DE)
(72) Erfinder: Reutter, Siegfried, 88436 Ebenhardzell (DE); Schliesser, Gerhard, 88489 Wain (DE); Winter, Thomas, 88433 Assmannshardt (DE)
(74) Vertreter: Grünecker, Kinkeldey, Stockmair & Schwanhäusser Anwaltssozietät

(56) Entgegenhaltungen:
- DE-C- 46 986
- DE-U- 6 601 246
- DE-U- 8 501 555
- DE-U- 29 819 328
- FR-A- 727 367
- FR-A- 923 092
- US-A- 3 283 361

## Beschreibung

Die vorliegende Erfindung betrifft eine Füllvorrichtung zum Befüllen von Hüllmaterial mit den Merkmalen des Oberbegriffs des Anspruches 1 sowie ein Verfahren zum Befüllen von Hüllmaterial.

Eine gattungsgemäße Füllvorrichtung ist aus der US 3,283,361 bekannt.

Bei der Herstellung von Würsten werden üblicherweise mehrere gefüllte Wurststränge zu Gebinden verflochten, indem die einzelnen Wurststränge portionsweise zu Gruppen zusammengefasst werden. Zur Herstellung dieser Gebinde werden entweder abgefüllte, aber noch nicht portionierte Wurststränge, also gerade Wurststränge ohne Abdrehstellen, oder bereits portionierte abgedrehte Wurststränge verwendet.

Bei der Verwendung gerader Wurststränge werden die Gebinde manuell hergestellt. Dabei werden mehrere Wurststränge gemeinsam abgedreht und anschließend zu einem Gebinde verflochten, wobei ein Wurststrang zwischen zwei weiteren Wurststrängen durchgeschleift wird. Die einzelnen Wurststränge weisen somit gemeinsame Abdrehund Verknüpfstellen auf, an denen die Stränge verflochten sind, so dass ein Gebinde mit mehreren Portionen entsteht, die gruppenweise zusammengefasst sind. Je nach Länge der Wurststränge ergeben sich mehrere aneinandergereihte Gruppen.

Die manuelle Verarbeitung der Wurststränge muss unter hohem Personal- und Zeitaufwand ausgeführt werden und führt unvermeidbar zu Längen- und Gewichtsschwankungen einzelner Gruppen bzw. einzelner Würste. Beim Abdrehen und Verflechten werden die Würste außerdem zwangsläufig intensiv berührt, was zu hygienischen Problemen führen kann.

Um diesem Problem zumindest teilweise abzuhelfen, werden maschinell portioniert und abgedrehte Wurststränge verwendet, so dass nur noch das Verflechten mehrerer vorportionierter Wurststränge zu einem Gebinde manuell erfolgt.

Die maschinelle Herstellung der abgedrehten Wurststränge erfolgt mittels bekannter Füllvorrichtungen, wie beispielsweise der aus dem deutschen Patent 198 10 046 bekannten Füllvorrichtung.

Das manuelle Verflechten mehrerer abgedrehter Wurststränge zu einem Gebinde erfolgt, indem die einzelnen Wurststränge an ihren jeweiligen maschinell hergestellten Abdrehstellen verdreht werden , so dass sich die zusammengefassten Portionsgruppen des Gebindes ergeben.

Hierbei ergeben sich allerdings Probleme daraus, dass Kaliberschwankungen im Naturdarm zu unterschiedlichen Portionslängen innerhalb der einzelnen Wurststränge führen. Werden deshalb Würste mit unterschiedlichen Längen zu einer Portionsgruppe verflochten, entsteht ein optisch unsauber wirkendes Gebinde.

Das Verflechten der maschinell abgedrehten Wurststränge erfolgt weiterhin manuell und erfordert eine gewisse Fingerfertigkeit, da die manuelle Handhabung der portionierten Wurststränge sehr umständlich ist.

Insgesamt sind die herkömmlichen Verarbeitungsweisen unbefriedigend, da die manuelle Handhabung der Wurststränge bei der Gebindeherstellung nicht nur zu langen Produktionszeiten unter hohem personellen Einsatz führt, sondern auch eine ständige Gefahrenquelle für eine mögliche bakterielle Kontamination der verarbeiteten Wurststränge darstellt.

Zwar weist die aus der US 3,283,361 bekannte Füllvorrichtung mehrere um eine Achse drehbare Füllrohre auf. Diese drehbaren Füllrohre dienen jedoch lediglich dazu, die Füllrohre verschiedenen bei der Herstellung eines einzigen Wurststranges erforderlichen Stationen zuzuführen. Dabei wird in einer ersten Stellung ein Füllrohr mit Füllgut befüllt. Dieses befüllte Füllrohr wird sodann in eine zweite Stellung gedreht, wobei Hüllmaterial über das Füllrohr gestreift wird. Daraufhin wird das Füllrohr in eine dritte Stellung überführt, in der das im Füllrohr befindliche Füllgut in das über das Füllrohr gestreifte Hüllmaterial ausgestoßen wird. Mit dieser bekannten Füllvorrichtung kann also nur ein einziger Wurststrang hergestellt werden.

Aus der FR-A-727 367 ist eine Füllvorrichtung mit mehreren Füllrohren bekannt, die fest mit einem Gehäuse verbunden sind. Mit dieser Vorrichtung lassen sich ebenfalls nur einzelne Wurststränge herstellen.

Aufgabe der vorliegenden Erfindung ist es, eine Füllvorrichtung und ein Verfahren zum Befüllen von Hüllmaterial bereitzustellen, die es ermöglichen, den Automatisierungsgrad bei der Herstellung von zu Gebinden verflochtenen Wurststrängen zu erhöhen.

Diese Aufgabe wird erfindungsgemäß durch eine Füllvorrichtung mit den Merkmalen des Anspruchs 1 bzw. durch ein Verfahren mit den Merkmalen des Anspruchs 16 gelöst.

Bevorzugte Ausführungsformen der Erfindung sind Gegenstand der Unteransprüche.

Im Unterschied zu den herkömmlichen Füllvorrichtungen mit nur einem Füllrohr weist die erfindungsgemäße Füllvorrichtung eine Tüllenanordnung mit wenigstens zwei Füllrohren auf. Durch die erfindungsgemäße Ausbildung der Tüllenanordnung mit wenigstens zwei Füllrohren ist es möglich, gleichzeitig Wurststränge in der gleichen Anzahl wie Füllrohre zu einem Gebinde zu verarbeiten.

Ferner sind die Füllrohre der erfindungsgemäßen Füllvorrichtung um eine gemeinsame Achse drehbar, wodurch die Bildung einer gemeinsamen Abdrehstelle der gefüllten Wurststränge erreicht wird. Gleichzeitig wird damit bezweckt, dass die Wurststränge an der gemeinsamen Abdrehstelle verdreht werden.

Mit Hilfe der erfindungsgemäßen Vorrichtung wird der Automatisierungsgrad bei der Herstellung von Wurststrängen dadurch erhöht, dass das Abdrehen mehrerer Wurststränge zu einem Gebinde maschinell erfolgt. Auf diese Weise wird die manuelle Handhabung der Wurststränge weiter verringert, so dass Personal eingespart und der Verarbeitungsprozess beschleunigt werden kann.

Darüber hinaus erlaubt die erfindungsgemäße Füllvorrichtung, das Abdrehen gleichlanger Würste, die unmittelbar zu einem Gebinde verdreht werden. Daraus ergibt sich eine optische Verbesserung der Gebinde.

Durch die nunmehr ermöglichte gleichzeitige Portionierung und das anschließende Abdrehen der Wurststränge wird die Gewichtsgenauigkeit der einzelnen Portionsgruppen verbessert. Das bedeutet, dass die Gewichtsgenauigkeit einer Portionsgruppe der Gewichtsgenauigkeit einer großen Portion entspricht. Bei der herkömmlichen Verfahrensweise wird die Gewichtsgenauigkeit einer Portionsgruppe durch die Summe der Gewichtsabweichungen der einzelnen verflochtenen Wurststränge bestimmt.

Mit Hilfe der erfindungsgemäßen Vorrichtung wird das Herstellungsverfahren hygienisch wesentlich verbessert, da das bisher erforderliche Zwischenlagern der einzelnen Wurststränge auf dem Arbeitstisch entfällt. Ferner ist es nicht mehr notwendig die einzelnen Wurststränge beim Verflechten mehrfach zu berühren. Außerdem entfällt die Zeit, die beim Verflechten der einzelnen Wurststränge notwendig war, so dass die Zeit verkürzt wird, während der die Wurststränge einer möglichen bakteriellen Kontamination ausgesetzt sind.

Durch die gleichzeitige Füllung mehrerer Wurststränge wird die Leistung der erfindungsgemäßen Füllvorrichtung erhöht. Weiterhin sinkt durch die Verwendung einer Tüllenanordnung mit wenigstens zwei Füllrohren der Ausstoßdruck des Füllgutes, was in einer verbesserten Produktqualität bei geringerem Verschleiß und zugleich höherer Leistung resultiert.

In einer bevorzugten Ausführungsform sind die Füllrohe auf der Mantelfläche eines gedachten Zylinders angeordnet, dessen Längsachse der gemeinsamen Achse entspricht, um die die Füllrohre beim Abdrehen gedreht werden. Beim Abdrehen werden somit die auf der Mantelfläche des gedachten Zylinders angeordneten Füllrohre der Tüllenanordnung konzentrisch um die Längsachse des gedachten Zylinders bewegt.

Durch die kreisförmige Bewegung der Füllrohre um die Längsachse A des gedachten Zylinders werden die durch die Füllrohre befüllten Wurststränge vorteilhafterweise symmetrisch an einer gemeinsamen Stelle abgedreht.

Vorzugsweise sind die Füllrohre in einer drehbaren Halteanordnung gelagert und mit einer Füllgutzuführung verbunden, so dass die Füllrohre zusammen um die gemeinsame Achse gedreht und mit Füllgut versorat werden können.

In einer bevorzugten Ausführungsform umfasst die drehbare Halteanordnung eine Rohrhalterung, die mit einem Hohlzylinder verbunden ist, wobei die Füllrohre in der Rohrhalterung befestigt sind und mit dem Hohlzylinder zur Füllgutzuführung in Verbindung stehen. Dieser Aufbau ermöglicht auf einfache Weise die Versorgung der Füllrohre mit Füllgut.

Der Hohlzylinder ist vorzugsweise von einem Abdrehgetriebe angetrieben und im Gehäuse des Abdrehgetriebes drehbar gelagert. Damit lassen sich in kompakter Bauweise die Füllgutzuführung und das Abdrehen realisieren.

Die Füllrohre sind in einer bevorzugten Ausführungsform gleichlang, so dass am freien Ende der Füllrohre die sichere Bildung einer gemeinsamen Abdrehstelle für alle Wurststränge gewährleistet ist.

Die Innen- und Außendurchmesser der Füllrohre sind vorzugsweise gleich groß, um eine gleichmäßige Befüllung zu gewährleisten.

In einer weiteren bevorzugten Ausführungsform weist die Tüllenanordnung drei Füllrohre auf, mit denen drei Wurststränge gleichzeitig zu einem Gebinde verarbeitet werden können.

Um das Hüllmaterial während des Befüllens abzubremsen, ist in einer weiteren bevorzugten Ausführungsform eine Darmbremsenanordnung an den Füllrohrenden vorgesehen, die eine den Füllrohren entsprechende Anzahl von Darmbremsen umfasst. Mittels einer solchen Darmbremsenanordnung kann das jeweilige Hüllmaterial der einzelnen Füllrohre getrennt während des Befüllens abgebremst werden, so dass ein kontrolliertes Befüllen der einzelnen Wurststränge vorteilhafterweise unterstützt wird.

Die Darmbremsenanordnung ist bevorzugterweise eine Scheibe, in der die Darmbremsen ausgebildet sind, wobei die Anordnung der Darmbremsen in der Scheibe der Anordnung der Füllrohre entspricht. Damit sind auf einfache Weise die einzelnen Darmbremsen in einem Bauteil integriert, was auch die Handhabung der Darmbremsenanordnung vereinfacht.

Vorteilhafterweise sind die Darmbremsen Öffnungen, in denen jeweils eine Bremslippe vorgesehen ist.

In einer bevorzugten Ausführungsform ist die Darmbremsenanordnung synchron zur Drehung der Füllrohre angetrieben, wodurch die Gefahr des Verwindens der Füllrohre vermieden wird.

Weiterhin kann in einer bevorzugten Ausführungsform eine Halteplatte mit einer Halteöffnung zur Aufnahme der Darmbremsenanordnung vorgesehen sein. In der Halteöffnung ist eine Anschlag ausgebildet, der die Darmbremsenanordnung entgegen der Befüllrichtung der Vorrichtung hält.

In einer weiteren bevorzugten Ausführungsform ist eine Nachschiebeeinrichtung mit einer den Füllrohren entsprechenden Anzahl von Hülsen vorgesehen, durch die die Füllrohre geführt sind. Mit Hilfe dieser Nachschiebeeinrichtung kann das auf die einzelnen Füllrohre aufgezogene jeweilige Hüllmaterial für alle Füllrohre gemeinsam nachgeschoben werden.

Bevorzugterweise ist die Nachschiebeeinrichtung eine Scheibe, in der die Hülsen integriert sind, wodurch das gleichzeitige Nachschieben erleichtert wird.

Ein Ausführungsbeispiel der erfindungsgemäßen Vorrichtung und des erfindungsgemäßen Verfahrens wird im Folgenden anhand der beigefügten schematischen Zeichnungen näher beschrieben.

Dabei zeigt die
- Fig. 1: einen Längsschnitt durch eine Tüllenanordnung mit drei Füllrohren entlang der Linie I-I in Fig. 2 und
- Fig. 2: einen Querschnitt durch die in Fig. 1 gezeigte Tüllenanordnung.

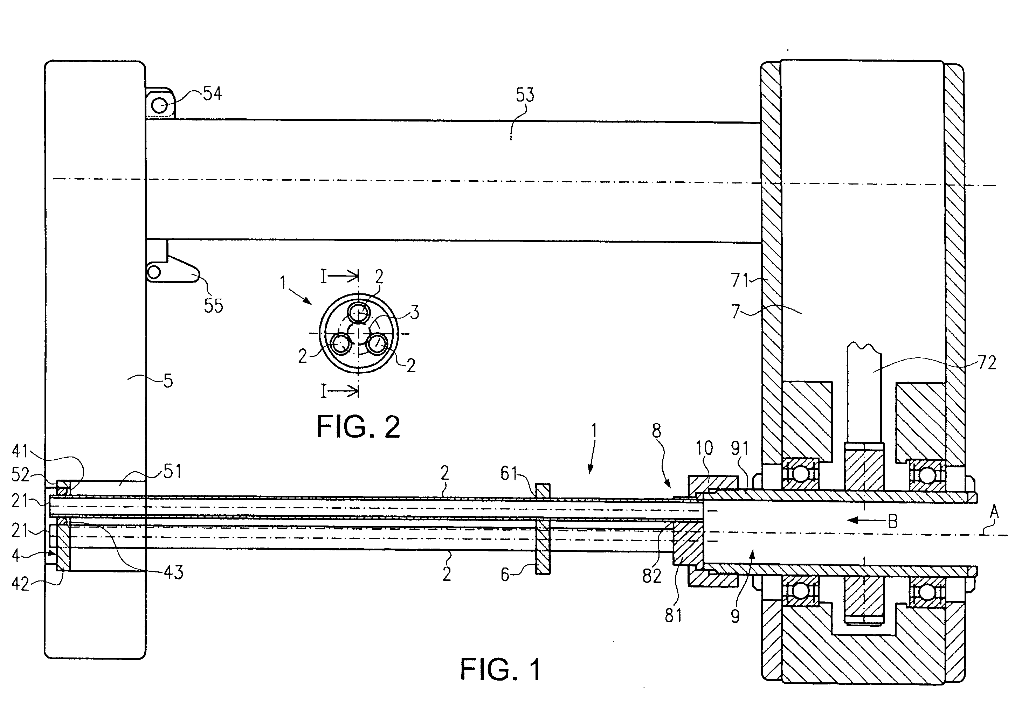

Wie in den Fig. 1 und 2 zu sehen, weist die gezeigte Tüllenanordnung 1 im vorliegenden Beispiel drei Füllrohre 2 auf. Die Anzahl der Füllrohre 2 ist jedoch nur beispielhaft zu verstehen, da zur Herstellung eines Gebindes mit zwei Wurststrängen, eine Tüllenanordnung 1 verwendet werden kann, die zwei Füllrohre 2 aufweist. Desgleichen können Gebinde mit einer größeren Anzahl von Wurststrängen hergestellt werden, indem eine Tüllenanordnung 1 verwendet wird, die ein Rohrbündel mit einer entsprechend erweiterten Anzahl an Füllrohren 2 umfasst.

Wie in Fig. 1 zu sehen, sind die Füllrohre 2 in einer drehbaren Halteanordnung 8 gelagert und mit einer Füllgutzuführung 9 verbunden, so dass die Füllrohre 2 sowohl mit Füllgut versorgt als auch gemeinsam um eine Achse gedreht werden können.

Die Füllrohre 2 sind dazu an ihrem maschinenseitigen Ende in einer Rohrhalterung 81 gelagert. Die Rohrhalterung 81 ist eine Platte mit einer der Anzahl der Füllrohre 2 entsprechenden Anzahl von Durchgangslöchem 82. In diesen Durchgangslöchem 82 sind die Füllrohre 2 an ihrem maschinenseitigen Ende beispielsweise durch Verschweißen befestigt und zur Versorgung mit Füllgut zugänglich. Die Füllrohre 2 erstrecken sich von der Rohrhalterung 81 weg zur Abgabestelle.

An die maschinenzugewandte Seitenfläche der Rohrhalterung 81 schließt sich ein Hohlzylinder 91 an, durch den das Füllgut den Füllrohren 2 in Befüllrichtung B zugeführt wird. Die Rohrhalterung 81 ist mit dem Hohlzylinder 91 so verbunden, dass die in der Rohrhalterung befestigten Füllrohrenden zur Zylinderinnenseite hin geöffnet sind.

Die Verbindung zwischen Rohrhalterung 81 und Hohlzylinder 91 erfolgt durch eine Mutter 10, die mit einem Ende auf ein Gewinde in der Außenwand des Hohlzylinders 91 geschraubt ist. Das andere Ende der Mutter 10 steht mit einem Absatz der Rohrhalterung 81 in Eingriff und verbindet somit lösbar die Rohrhalterung 81 und den Hohlzylinder 91.

Auf diese Weise kann die Tüllenanordnung 1 vom Hohlzylinder 91 abgeschraubt und durch eine andere Tüllenanordnung 1 mit beispielsweise einer anderen Anzahl von Füllrohren 2 ersetzt werden.

Andere Verbindungsmöglichkeiten zwischen Rohrhalterung 81 und Hohlzylinder 91, beispielsweise nichtlösbare Verbindungen, sind denkbar.

Die in den Fig. 1 und 2 gezeigten Füllrohre 2 sind parallel auf der Mantelfläche eines gedachten Zylinders angeordnet, der sich in der Füllrichtung B erstreckt. Dieser gedachte Zylinder ist in Fig. 2 mit dem Bezugszeichen 3 versehen.

Die Füllrohre 2 weisen durch diese Anordnung über ihre gesamte Länge den gleichen Abstand zur Längsachse A des gedachten Zylinders 3 auf. Bei drei Füllrohren 2 sind die auf der Mantelfläche des gedachten Zylinders 3 angeordneten Füllrohre 2 darüberhinaus auf den Eckpunkten eines gedachten gleichschenkligen Dreiecks angeordnet, wie in Fig. 2 verdeutlicht.

Die Längsachse A des gedachten Zylinders 3 entspricht der Drehachse der Tüllenanordnung 1, um die die Tüllenanordnung 1 beim Abdrehen gedreht wird. Bei Drehung der Rohrhalterung 81 der Tüllenanordnung 1 werden die in der Rohrhalterung 81 befestigten Füllrohre 2 gemeinsam mitgedreht.

Durch die vorstehend beschriebene Anordnung der Füllrohre 2 wird ferner erreicht, dass die Füllrohre 2 beim Abdrehen konzentrisch um die Längsachse A des gedachten Zylinders 3 drehen. Die Füllrohre 2 werden also beim Abdrehen gemeinsam auf der Mantelfläche des gedachten Zylinders 3 geführt.

Die drehbare Lagerung der Tüllenanordnung 1 mit den in der Rohrhalterung 81 befestigten Füllrohren 2 erfolgt im Gehäuse 71 eines Abdrehgetriebes 7.

Dazu ist der Hohlzylinder 91 mittels beispielsweise Kugelrollenlager im Gehäuse 71 des Abdrehgetriebes 7 gelagert. Bei Drehung des Hohlzylinders 91 drehen die mit diesem verbundene Rohrhalterung 81 sowie die Füllrohre 2 um die gemeinsame Achse A mit. Die Antriebsverbindung zwischen Hohlzylinder 82 und Abdrehgetriebe 7 erfolgt durch einen Zahnriemen 72, wobei andere Antriebsarten möglich sind.

Auf diese Weise treibt das Abdrehgetriebe 7 die Tüllenanordnung 1 an, wobei das Getriebe 7 so steuerbar ist, dass zum Abdrehen die gewünschte Anzahl von Umdrehungen eingestellt werden kann, um eine ausreichend feste Abdrehung je nach Konsistenz des verwendeten Füllgutes und Art des Hüllmaterials zu erzielen.

Auf der Abgabeseite der Tüllenanordnung 1 weisen die Füllrohre 2 freie Enden mit Abgabeöffnungen 21 auf, über die das Wurstbrät oder anderes pastöses Füllgut in die Darmhüllen oder anderes Hüllmaterial abgegeben wird. Wie in den Fig. 1 und 2 verdeutlicht, sind die Abgabeöffnungen 21 der Füllrohre nebeneinander angeordnet. Darüber hinaus liegen die gezeigten Abgabeöffnungen 21 annähernd in einer Ebene, die sich senkrecht zur Befüllrichtung B erstreckt.

Im Bereich der Abgabeöffnungen 21 der Füllrohre 2 ist eine Darmbremsenanordnung 4 vorgesehen, die auf die Füllrohrenden aufgesetzt ist. Diese Darmbremsenanordnung 4 bremst die nichtgezeigten auf die einzelnen Füllrohre 2 aufgezogenen Darmhüllen beim Befüllen.

Dazu umfasst die Darmbremsenanordnung 4 mehrere Darmbremsen 41, deren Anzahl sich nach der Anzahl der Füllrohre richtet. Im vorliegenden Beispiel sind deshalb drei Darmbremsen vorgesehen, die den einzelnen Füllrohrenden jeweils zugeordnet sind.

In dem in Fig. 1 gezeigten Ausführungsbeispiel ist die Darmbremsenanordnung 4 als Scheibe 42 ausgeführt, in die die einzelnen Darmbremsen 41 integriert sind. Die Darmbremsen 41 sind dadurch untereinander verbunden und können zusammen mit den Füllrohren 2 mitgedreht werden.

Obwohl die Ausführung der Darmbremsenanordnung 4 als Scheibe 42 besonders zweckmäßig ist, sind andere Ausführungen denkbar, die das gemeinsame Mitdrehen der Darmbremsen 41 mit den Füllrohren 2 ermöglichen.

Im vorliegenden Beispiel sind die Darmbremsen 41 als Öffnungen in der Scheibe 41 ausgebildet, deren Anordnung der Anordnung der Füllrohre 2 entspricht. Die Öffnungen in der Scheibe 41 liegen also in diesem Beispiel, wie die Füllrohre 2, auf den Ecken eines gleichschenkligen Dreiecks. In jeder Öffnung ist eine Bremslippe 43 vorgesehen, die vorzugsweise elastisch ausgebildet ist.

Andere Ausgestaltungen der Darmbremsen sind ebenfalls möglich. So könnten beispielsweise die Öffnungen in der Scheibe 42 konisch ausgebildet sein, wobei sich die Öffnungen zur Abgabeseite der Tüllenanordnung 1 hin verjüngen. Entsprechend konisch ausgebildete Füllrohrenden wirken mit den konischen Öffnungen der Darmbremsenanordnung 4 zusammen, wodurch die Bremswirkung erzielt wird, die sich durch axiale Verstellung der Darmbremsenanordnung 4 steuern läßt. Durch axiales Verschieben der Darmbremsenanordnung 4 in Richtung der Maschinenseite der Tüllenanordnung 1 wird die konische Öffnung weiter auf das Füllrohr aufgeschoben, wodurch der Anpressdruck und somit die Bremswirkung erhöht werden. Durch axiales Verschieben der Darmbremsenanordnung 4 in Richtung der Abgabeseite der Tüllenanordnung 1 läßt sich der Anpressdruck und somit die Bremswirkung verringern. Die axiale Verstellung der Darmbremsenanordnung 4 erfolgt mit Hilfe einer Schraubmutter.

Im Betrieb ist die Darmbremsenanordnung 4 auf die Füllrohre 2 aufgesteckt, so dass die Füllrohrenden im Bereich der Abgabeöffnungen 21 der Füllrohre 2 durch die Öffnungen der Scheibe 41 geführt sind und etwas über die Darmbremsenanordnung 4 überstehen.

Beim Befüllen kann die Darmbremsenanordnung 4 entweder manuell oder mit Hilfe einer Halteplatte 5, wie in Fig. 1 gezeigt, gehalten werden. Die Halteplatte 5 weist eine Halteöffnung 51 auf, in der die Darmbremsenanordnung 4 beim Befüllen aufgenommen wird. Der Innendurchmesser der Halteöffnung 51 entspricht dabei im Wesentlichen dem Außendurchmesser der Scheibe 42 der Darmbremsenanordnung 4. In axialer Richtung ist die Darmbremsenanordnung 4 durch einen Anschlag 52 gesichert, der in der Halteöffnung 51 vorgesehen ist und die Darmbremsenanordnung 4 entgegen der Befüllrichtung B axial hält.

Beim Befüllen wird die Darmbremsenanordnung 4 gegen den Anschlag 52 gedrückt und dreht in der Halteöffnung 51 mit den sich drehenden Füllrohren 2 mit oder wird über einen nichtgezeigten Antrieb in der Halteplatte 5 synchron zu den Füllrohren 2 angetrieben, um das Verwinden der Füllrohre 2 zu vermeiden. Der Antrieb kann über den Umfang der Scheibe 42 mittels eines Ritzels erfolgen oder über einen Mitnehmerstift, der an einer Seitenfläche der Scheibe 42 vorgesehen ist.

Die Halteplatte 5 ist schwenkbar mit einem Arm 53 verbunden, der am Gehäuse 71 des Abdrehgetriebes 7 befestigt ist. Durch Schwenken der Halteplatte 5 lässt sich diese aus ihrer Betriebsposition, in der sie senkrecht zu den Füllrohren 2 steht, in eine Warteposition verschwenken, in der die Darmbremsenanordnung 4 freigegeben wird und von den Füllrohren 2 abgenommen werden kann. Zum Verschwenken ist die Halteplatte 5 in einem Drehgelenk 54 am Arm 53 gelagert und kann mit Hilfe eines Verschlusses 55 in Betriebsposition arretiert werden.

Weiterhin ist in dem in Fig. 1 gezeigten Beispiel eine Nachschiebeeinrichtung 6 vorgesehen. Die Nachschiebeeinrichtung 6 ist eine Scheibe oder eine Platte, in der Hülsen 61 integriert sind, durch die die Füllrohre 2 geführt sind. Dazu entsprechen die Anordnung und Anzahl der Hülsen 61 der Anordnung und Anzahl der Füllrohre 2. Mit Hilfe dieser Nachschiebeeinrichtung 6 ist es möglich, die auf die einzelnen Füllrohre 2 aufgezogenen Darmhüllen gleichzeitig nachzuschieben.

Nachfolgend wird die Betriebsweise der in den Fig. 1 und 2 beschriebenen Füllvorrichtung erläutert.

Zum Bestücken der Füllvorrichtung mit Darmhüllen wird die Halteplatte 5 in die Warteposition geklappt und die dadurch freigegebene Darmbremsenanordnung 4 von den Füllrohren 2 abgenommen. Alternativ wird die Darmbremsenanordnung 4 mit der Halteplatte 5 weggeschwenkt.

Auf jedes Füllrohr 2 der Tüllenanordnung 1 werden annähernd gleichlange Darmzüge aufgezogen, wobei die freien Enden der jeweiligen Darmhüllen verschlossen werden. Daraufhin wird die Darmbremsenanordnung 4 auf die Füllrohre 2 aufgesteckt, auf denen sich die aufgezogenen Darmhüllen befinden. Zur axialen Fixierung der Darmbremsenanordnung 4 wird die Halteplatte 5 in die Halteposition geschwenkt und mittels des Verschlusses 55 arretiert, so dass eine Seite der Scheibe 42 der Darmbremsenanordnung 4 mit dem Anschlag 52 der Halteplatte 5 in Anlage kommt.

An der Füllvorrichtung wird das gewünschte Gruppengewicht, im vorliegenden Beispiel also das dreifache Einzelportionsgewicht, vorgewählt. Daraufhin werden alle drei Einzelportionen einer Portionsgruppe des Gebindes während eines Portionsausstoßes gefüllt, indem das Wurstbrät über die Abgeabeöffnungen 21 der drei Füllrohre 2 in die Darmhüllen gleichzeitig abgegeben wird.

Nach diesem Portionsausstoß wird die Tüllenanordnung 1 um die gewünschte Anzahl von Umdrehungen durch das Abdrehgetriebe 7 gedreht. Die befüllte Portionsgruppe am abgabeseitigen Ende der Füllrohre 2 der Tüllenanordnung 1 wird dabei manuell gegen radiales Verdrehen gehalten.

Durch die Drehung der Füllrohre 2 um die Längsachse A des gedachten Zylinders 3 beschreiben die Füllrohrenden, eine kreisförmige Bewegung um die Längsachse A. Die auf die Füllrohre 2 aufgezogenen Darmhüllen werden dabei mitgenommen und ebenfalls auf der Kreisbahn geführt. Da gleichzeitig die befüllte Portionsgruppe am abgabeseitigen Ende der Füllrohre 2 der Tüllenanordnung 1 gegen radiales Verdrehen gehalten wird, verdrillen die Darmhüllen im Bereich zwischen den Abgabeöffnungen 21 und der abgefüllten Portionsgruppe, so dass eine gemeinsame Abdreh- und Verdrehstelle erzeugt wird. Dadurch werden gleichzeitig die drei Wurststränge an einer gemeinsamen Stelle abgedreht und zu einem Gebinde verdreht.

Die vorstehend beschriebenen Schritte werden solange wiederholt, bis die auf die Füllrohre 2 aufgezogenen Darmhüllen aufgebraucht sind.

Die Sicherung gegen radiales Verdrehen der Portionsgruppe könnte auch maschinell mit Hilfe einer entsprechenden Verdrehsicherung erfolgen.

An den Abdrehstellen werden die Portionsgruppen durch die Abdrehung zusammengezogen, wodurch die Wurstenden einer Portionsgruppe in die Lücken zwischen den Wurstenden der benachbarten Portionsgruppe eingreifen. Somit stützen sich die einzelnen Wurstkuppen gegenseitig ab und verhindern damit das Aufdrehen der gemeinsamen Abdrehstelle der Wurstkuppe. Die gemeinsame Abdrehstelle hat außerdem zur Folge, dass annähernd gleiche Portionslängen bei gleichen Gruppengewichten entstehen.

Mit Hilfe der Nachschiebeeinrichtung 6 können die Darmhüllen der einzelnen Füllrohre 2 beim Befüllen gleichzeitig nachgeschoben werden.

Die beispielhaft gezeigte Füllvorrichtung eignet sich insbesondere zum Befüllen von Darmhüllen mit Wurstbrät. Der Einsatz dieser Füllvorrichtung zum Befüllen anderer Hüllmaterialien mit pastösem Füllgut ist darüber hinaus auch möglich.

## Patentansprüche

1. Füllvorrichtung zum Befüllen von Hüllmaterial, insbesondere von Darmhüllen, mittels pastösem Füllgut, wie Wurstbrät, mit einer Tüllenanordnung (1) für die Abgabe des pastösen Füllgutes in das Hüllmaterial, wobei die Tüllenanordnung (1) wenigstens zwei Füllrohre (2) aufweist, die um eine gemeinsame Achse (A) drehbar sind, **dadurch gekennzeichnet, dass** die Füllrohre (2) zur Erzeugung mehrerer Stränge aus befülltem Hüllmaterial gleichzeitig mit Füllgut befüllbar sind.

2. Füllvorrichtung nach Anspruch 1, **dadurch gekennzeichnet, dass** die Füllrohre (2) auf der Mantelfläche eines gedachten Zylinders (3) angeordnet sind, dessen Längsachse der gemeinsamen Achse (A) entspricht.

3. Füllvorrichtung nach Anspruch 1 oder 2, **dadurch gekennzeichnet, dass** die Füllrohre (2) in einer drehbaren Halteanordnung (8) gelagert und mit einer Füllgutzuführung (9) verbunden sind.

4. Füllvorrichtung nach Anspruch 3, **dadurch gekennzeichnet, dass** die drehbare Halteanordnung (8) eine Rohrhalterung (81) umfasst, die mit einem Hohlzylinder (91) verbunden ist, wobei die Füllrohre (2) in der Rohrhalterung (81) befestigt sind und mit dem Hohlzylinder (91) zur Füllgutzuführung in Verbindung stehen.

5. Füllvorrichtung nach Anspruch 4, **dadurch gekennzeichnet, dass** der Hohlzylinder (91) von einem Abdrehgetriebe (7) angetrieben und im Gehäuse (71) des Abdrehgetriebes (7) drehbar gelagert ist.

6. Füllvorrichtung nach wenigstens einem der vorherigen Ansprüche, **dadurch gekennzeichnet, dass** die Füllrohre (2) gleich lang sind.

7. Füllvorrichtung nach wenigstens einem der vorherigen Ansprüche, **dadurch gekennzeichnet, dass** jeweils die Innendurchmesser und jeweils die Außendurchmesser der Füllrohre (2) gleich groß sind.

8. Füllvorrichtung nach wenigstens einem der vorherigen Ansprüche, **dadurch gekennzeichnet, dass** die Tüllenanordnung (1) drei Füllrohre (2) aufweist.

9. Füllvorrichtung nach wenigstens einem der vorherigen Ansprüche, **dadurch gekennzeichnet, dass** eine Darmbremsenanordnung (4) an den Füllrohrenden vorgesehen ist, die eine den Füllrohren (2) entsprechende Anzahl von Dambremsen (41) umfasst.

10. Füllvorrichtung nach Anspruch 9, **dadurch gekennzeichnet, dass** die Darmbremsenanordnung (4) eine Scheibe (42) umfasst, in der die Darmbremsen (41) ausgebildet sind, wobei die Anordnung der Darmbremsen (41) in der Scheibe (42) der Anordnung der Füllrohre (2) entspricht.

11. Füllvorrichtung nach Anspruch 10, **dadurch gekennzeichnet, dass** die Darmbremsen (41) Öffnungen in der Scheibe (42) mit einem dem Außendurchmesser der Füllrohre (2) angenäherten Durchmesser umfassen, in denen jeweils eine Bremslippe (43) vorgesehen ist.

12. Füllvorrichtung nach wenigstens einem der vorherigen Ansprüche 9 bis 11, **dadurch gekennzeichnet, dass** die Darmbremsenanordnung (4) synchron zur Drehung der Füllrohre (2) angetrieben ist.

13. Füllvorrichtung nach wenigstens einem der vorherigen Ansprüche, **dadurch gekennzeichnet, dass** eine Halteplatte (5) mit einer Halteöffnung (51) zur Aufnahme der Darmbremsenanordnung (4) vorgesehen ist, wobei in der Halteöffnung (51) ein Anschlag (52) ausgebildet ist, der die Darmbremsenanordnung (4) entgegen der Befüllrichtung (B) hält.

14. Füllvorrichtung nach wenigstens einem der vorherigen Ansprüche, **dadurch gekennzeichnet, dass** eine Nachschiebeeinrichtung (6) mit einer den Füllrohren (2) entsprechenden Anzahl von Hülsen (61) vorgesehen ist, durch die die Füllrohre (2) geführt sind.

15. Füllvorrichtung nach Anspruch 14, **dadurch gekennzeichnet, dass** die Nachschiebeeinrichtung (6) eine Scheibe ist, in der die Hülsen (61) integriert sind.

16. Verfahren zum Befüllen von Hüllmaterial, insbesondere von Darmhüllen, mit pastösem Füllgut, wie Wurstbrät, bei dem mehrere Stränge erzeugt werden, indem das Füllgut in das Hüllmaterial durch wenigstens zwei Füllrohre (2) gleichzeitig abgegeben wird und die Füllrohre (2) zum Abdrehen der Stränge um eine gemeinsame Achse gedreht werden.

## Claims

1. Filling device for filling casing material, in particular sausage casings, by means of pasty filling material, such as sausage meat, comprising a nozzle arrangement (1) for delivering the pasty filling material to the casing material, the nozzle arrangement (1) having at least two filling tubes (2) rotatable about a common axis (A), **characterised in that** the filling tubes (2) can be filled simultaneously with filling material in order to produce several strings of filled casing material.

2. Filling device according to claim 1, **characterised in that** the filling tubes (2) are arranged on the circumferential surface of an imaginary cylinder (3), the longitudinal axis of which corresponds to the common axis (A).

3. Filling device according to claim 1 or claim 2, **characterised in that** the filling tubes (2) are mounted in a rotatable holding arrangement (8) and are connected to a supply line (9) for filling material.

4. Filling device according to claim 3, **characterised in that** the rotatable holding arrangement (8) includes a tube holder (81) connected to a hollow cylinder (91). the filling tubes (2) being secured in the tube holder (81) and being connected to the hollow cylinder (91) for the supply of the filling material.

5. Filling device according to claim 4, **characterised in that** the hollow cylinder (91) is driven by a twist-off mechanism (7) and is rotatably mounted in the housing (71) of the twist-off mechanism (7).

6. Filling device according to at least one of the preceding claims, **characterised in that** the filling tubes (2) are of identical length.

7. Filling device according to at least one of the preceding claims, **characterised in that** the respective inner diameters and the respective outer diameters of the filling tubes (2) are identical.

8. Filling device according to at least one of the preceding claims, **characterised in that** the nozzle arrangement (1) has three filling tubes (2).

9. Filling device according to at least one of the preceding claims, **characterised in that** a casing braking arrangement (4) is provided at the ends of the filling tubes and includes a number of casing brakes (41) corresponding to the number of filling tubes (2).

10. Filling device according to claim 9, **characterised in that** the casing braking arrangement (4) includes a disc (42) in which the casing brakes (41) are formed, the arrangement of the casing brakes (41) in the disc (42) corresponding to the arrangement of the filling tubes (2).

11. Filling device according to claim 10, **characterised in that** the casing brakes (41) include openings in the disc (42) with a diameter approximately equal to the outer diameter of the filling tubes (2), respective braking lips (43) being provided in the openings.

12. Filling device according to at least one of the preceding claims 9 to 11, **characterised in that** the casing braking arrangement (4) is driven in synchronism with the rotation of the filling tubes (2).

13. Filling device according to at least one of the preceding claims, **characterised by** a holding plate (5) with a holding opening (51 ) for receiving the casing braking arrangement (4), a stop (52) being formed in the holding opening (51) to stop the casing braking arrangement (4) in the opposite direction to the filling direction (B).

14. Filling device according to at least one of the preceding claims, **characterised by** a pusher device (6) with a number of sleeves (61) corresponding to the number of filling tubes (2), the filling tubes (2) being guided through the sleeves.

15. Filling device according to claim 14, **characterised in that** the pusher device (6) is a disc into which the sleeves (61) are integrated.

16. Method of filling casing material, in particular sausage casings, with pasty filling material, such as sausage meat, in which several strings are produced by delivering the filling material to the casing material through at least two filling tubes (2) simultaneously and rotating the filling tubes (2) about a common axis in order to twist off the strings.

## Revendications

1. Dispositif de bourrage d'enveloppes tubulaires, en particulier d'enveloppes de boyaux, au moyen d'une charge pâteuse, telle que chair à saucisses, comprenant un agencement de douilles (1) pour la décharge de la charge pâteuse dans les enveloppes tubulaires, l'agencement de douilles (1) présentant au moins deux tubes de bourrage (2) pouvant tourner autour d'un axe commun (A), **caractérisé en ce que** les tubes de bourrage (2) peuvent être remplis simultanément d'une charge pour produire plusieurs cordons d'enveloppes tubulaires remplies.

2. Dispositif de bourrage suivant la revendication 1, **caractérisé en ce que** les tubes de bourrage (2) sont disposés sur la surface d'enveloppe d'un cylindre imaginaire (3), dont l'axe longitudinal correspond à l'axe commun (A).

3. Dispositif de bourrage suivant l'une des revendications 1 et 2, **caractérisé en ce que** les tubes de bourrage (2) sont montés dans un agencement de retenue rotatif (8) et assemblés avec une arrivée de charge (9).

4. Dispositif de bourrage suivant la revendication 3, **caractérisé en ce que** l'agencement de retenue (8) rotatif comprend une fixation de tubes (81) assemblée avec un cylindre creux (91), les tubes de bourrage (2) étant alors fixés dans la fixation de tubes (81) et étant en liaison avec le cylindre creux (91) pour l'arrivée de la charge.

5. Dispositif de bourrage suivant la revendication 4, **caractérisé en ce que le** cylindre creux (91) est entraîné par un mécanisme de séparation par torsion (7) et est monté tournant dans le carter (71) du mécanisme (7).

6. Dispositif de bourrage suivant l'une au moins des revendications précédentes, **caractérisé en ce que** les tubes de bourrage (2) sont de longueur égale.

7. Dispositif de bourrage suivant l'une au moins des revendications précédentes, **caractérisé en ce que** chaque diamètre intérieur et chaque diamètre extérieur des tubes de bourrage (2) a une dimension égale.

8. Dispositif de bourrage suivant l'une au moins des revendications précédentes, **caractérisé en ce que** l'agencement de douilles (1) présente trois tubes de bourrage (2).

9. Dispositif de bourrage suivant l'une au moins des revendications précédentes, **caractérisé en ce qu'un** agencement de freinage de boyaux (4) est prévu sur les extrémités de tubes de bourrage, cet agencement comprenant un nombre de freins (41) correspondant aux tubes de bourrage (2).

10. Dispositif de bourrage suivant la revendication 9, **caractérisé en ce que** l'agencement de freinage de boyaux (4) comprend un disque (42) dans lequel sont réalisés les freins (41), l'agencement des freins de boyaux (41) dans le disque (42) correspondant à l'agencement des tubes de bourrage (2).

11. Dispositif de bourrage suivant la revendication 10, **caractérisé en ce que** les freins de boyaux (41) comportent des ouvertures dans le disque (42) d'un diamètre à peu près égal au diamètre extérieur des tubes de bourrage (2), dans chacune desquelles est prévu une lèvre de frein (43).

12. Dispositif de bourrage suivant l'une au moins des revendications précédentes 9 à 11, **caractérisé en ce que** l'agencement de freinage de boyaux (4) est entraîné en synchronisme avec la rotation des tubes de bourrage (2).

13. Dispositif de bourrage suivant l'une au moins des revendications précédentes, **caractérisé en ce qu'**une plaque de retenue (5) avec une ouverture de maintien (51) est prévue pour recevoir l'agencement de freinage de boyaux (4), une butée (52), qui maintient l'agencement de freinage (4) dans la direction contraire à la direction de remplissage (B), étant réalisée dans l'ouverture de maintien (51).

14. Dispositif de bourrage suivant l'une au moins des revendications précédentes, **caractérisé en ce qu'**il est prévu un dispositif de poussée (6) avec un nombre de manchons (61) correspondant aux tubes de bourrage (2), au travers desquels sont guidés les tubes de bourrage (2).

15. Dispositif de bourrage suivant la revendication 14, **caractérisé en ce que** le dispositif de poussée (6) est un disque dans lequel sont intégrés les manchons (61).

16. Procédé de bourrage d'enveloppes tubulaires, en particulier d'enveloppes de boyaux, par une charge pâteuse, telle que chair à saucisses, dans lequel plusieurs cordons sont produits, la charge étant simultanément déchargée dans les enveloppes tubulaires par au moins deux tubes de bourrage (2) et les tubes (2) étant tournés autour d'un axe commun pour la séparation par torsion des cordons.
